(19) Europäisches Patentamt / European Patent Office / Office européen des brevets

(11) **EP 1 835 450 A1**

(12) **EUROPEAN PATENT APPLICATION**

(43) Date of publication:
**19.09.2007 Bulletin 2007/38**

(51) Int Cl.:
**G06Q 10/00** *(2006.01)*     **G06Q 30/00** *(2006.01)*

(21) Application number: **07005125.5**

(22) Date of filing: **13.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.03.2006 GB 0605451**

(71) Applicant: **QM Group Limited**
**Milton Keynes MK19 7HJ (GB)**

(72) Inventor: **Green, Terence Ronald**
**Stratford Upon Avon**
**Warwickshire CV37 7LZ (GB)**

(74) Representative: **Raynor, Simon Mark et al**
**Urquhart-Dykes & Lord LLP**
**Midsummer House**
**413 Midsummer Boulevard**
**Central Milton Keynes MK9 3BN (GB)**

(54) **Customer service system and process**

(57)     A customer service process for allocating servers to customers includes receiving a service request (40) that includes data identifying a requested service grade (44), retrieving from a database a set of selection values (46) for each of a plurality of servers and a set of weighting values (56), wherein the set of weighting values (56) is selected from a plurality of sets on the basis of the requested service grade (44), obtaining a set of weighted selection values (58) for each server by applying the set of weighting values (56) to each set of selection values (46), obtaining from the set of weighted selection values (58) a suitability value (66) for each server, and selecting a server on the basis of the obtained suitability values (66).

Fig. 7

EP 1 835 450 A1

Stage 3: Apply Rank
weighting and sum into
a single suitability value
for each person.

| Rank | K1 | K2 | K3 | K4 | K5 | K6 | K7 |
|------|-----|-----|-----|-----|-----|-----|-----|
| | 1.2 | 1.0 | 1.0 | 1.0 | 1.1 | 0.9 | 0.8 |

60

| John | 3.36 | 7.0 | 1.0 | 2.2 | 1.21 | 3.78 | 1.6 |
|------|------|-----|-----|-----|------|------|-----|
| Mary | 6.72 | 5.6 | 2.0 | 3.3 | 1.21 | 3.78 | 1.6 |
| Jane | 8.4 | 5.6 | 1.0 | 3.3 | 2.42 | 1.26 | 1.6 |
| Samuel | 6.72 | 7.0 | 1.0 | 1.1 | 2.42 | 2.52 | 1.6 |

64

| John | 20.15 |
|------|-------|
| Mary | 24.21 |
| Jane | 23.58 |
| Samuel | 22.36 |

66

Stage 4: Choose highest
rated person to serve the
customer.

68

| Mary |
|------|

70

*Fig. 7 (cont.)*

2

## Description

The present invention relates to a customer service system and a process for allocating serving staff ("servers") to customers, so that the servers can respond to enquiries ("service requests") from the customers. The invention has particular application in business environments where servers meet and serve customers in person, for example in retail stores, banks and similar institutions.

Most customers of large retail establishments will occasionally have experienced some difficulty in obtaining an appropriate level of assistance from the servers. Sometimes, customers merely wish to browse and do not wish to be approached by a server. On other occasions, the customer may require specific information or advice or a product demonstration, and may then find it hard to locate an available server with an appropriate level of expertise and knowledge. Sometimes, the customer may simply wish to make a purchase and does not require expert advice, but only wants quick and efficient service.

The difficulty of matching servers to customers according to the needs of the customers also causes problems for the business. On one hand, the business does not want the customers to become frustrated as this can lead to a loss of sales. On the other hand, the business does not wish to employ more staff than necessary, as this increases overheads. It is therefore important for the business to ensure that the staff are used efficiently and are allocated to answer service requests from customers in the most appropriate manner. This may not always be the server with the most knowledge: if the customer only wishes to make a purchase and does not request expert advice, a server with a lower level of product knowledge may be more suitable.

Similar problems arise in other non-retail businesses, for example banks. Customers entering the bank will usually require some sort of personal service, but this may be at either a very simple routine level (such as when depositing cash), or it may be more complex, requiring assistance from a suitably qualified expert, for example when taking out a loan or mortgage. For certain transactions, there may be a legal requirement for the enquiry to be dealt with by a suitably qualified server. It is therefore important both for the customer and for the business that the customer is served by a suitably qualified server, according to the nature of the customer's service request.

It is an object of the present invention to provide a customer service system that mitigates at least some of the aforesaid problems.

According to the present invention there is provided a customer service process for allocating servers to customers, the process including receiving a service request that includes data identifying a requested service grade, retrieving from a database a set of selection values for each of a plurality of servers and a set of weighting values, wherein the set of weighting values is selected from a plurality of sets on the basis of the requested service grade, obtaining a set of weighted selection values for each server by applying the set of weighting values to each set of selection values, obtaining from the set of weighted selection values a suitability value for each server, and selecting a server on the basis of the obtained suitability values.

The process allows servers to be matched to customers according to their needs, as specified in the service request. This improves the customer experience while at the same time ensuring for the service provider the most effective and efficient use of staff resources.

Advantageously, the service request includes data identifying a product, and the step of retrieving a set of selection values includes selecting a set of selection values on the basis of the identified product. This allows the server to be selected at least partially on the basis of their product knowledge, so that where the customer requires technical advice in relation to a product, a server with a suitable degree of product knowledge is allocated to serve the customer. On the other hand, if the customer does not require detailed product advice, the server may be selected from a wider range of available servers, including those with a lower level of product knowledge.

Advantageously, the step of obtaining a set of weighted selection values for each server includes multiplying each selection value by a corresponding weighting value.

Advantageously, the step of obtaining a suitability value for each server includes summing the weighted selection values.

The process may include retrieving from a database a set of adjustment values, obtaining a set of adjusted selection values for each server by applying the set of adjustment values to each set of weighted selection values, and obtaining from the set of adjusted selection values a suitability value for each server. This allows the allocation process to be adjusted according to particular circumstances, to ensure efficient operation.

Advantageously, the step of obtaining a set of adjusted selection values for each server includes multiplying each weighted selection value by a corresponding adjustment value. The step of obtaining a suitability value for each server preferably includes summing the adjusted selection values.

Advantageously, the server with the highest suitability value is selected.

At least one of the selection values may relate to the availability of the servers, and/or to the server's product knowledge, and/or to a server skill.

Preferably, there is associated with each server a plurality of product-related selection values that relate to different products or product groups, one or more of those product-related selection values being selected on the basis of product information contained in the service request.

The customer service process may include checking a qualification rating for each server and excluding from selection any server without a suitable qualification rating. This ensures that where for example there are legal requirements for advice to be given only by qualified personnel, the selection is made only from those servers who have the necessary qualifications.

The process may include transmitting the service request to the selected server, and preferably checking for acceptance by the selected server of the transmitted service request. The process may include selecting and transmitting the service request to another server if the originally selected server does not accept the transmitted service request. Preferably, the customer is notified when a service request is requested.

The process may include notifying the customer in the event that no suitable server accepts the service request, and offering the customer the option of either waiting or cancelling the service request. The process may include entering the service request into a queue in the event that no suitable server accepts the service request, and transmitting the service request to a suitable server when one becomes available.

The process may therefore use one or more strategies for dealing with the situation in which the first selected server is unable to accept the service request. The service request may then be passed to another suitable server, or the customer may be offered the option of waiting in a queue. The customer is kept informed so as to avoid frustration.

According to another aspect of the invention there is provided a customer service system for allocating servers to customers, the system including a customer service point for receiving a service request that includes data identifying a requested service grade, a controller for selecting a server on the basis of the server's suitability for responding to the service request, and a database containing a set of selection values for each of a plurality of servers and plural of sets of weighting values, wherein the controller is constructed and arranged to retrieve from the database a set of selection values for each server and a set of weighting values that is selected on the basis of the requested service grade, to obtain a set of weighted selection values for each server by applying the set of weighting values to each set of selection values, to obtain from the set of weighted selection values a suitability value for each server, and to select a server on the basis of the obtained suitability values.

The system may include a communications system for transmitting the service request to the selected server. Advantageously, the communications system is constructed and arranged to enable two-way communication between the central controller and the servers.

The communications system is preferably arranged to enable the servers to accept or reject a service request. The controller is preferably constructed and arranged to check for acceptance by the selected server of the transmitted service request, and preferably to select and transmit the service request to another server if the originally selected server does not accept the transmitted service request.

The controller may be constructed and arranged to notify the customer when a service request is requested, and preferably to notify the customer in the event that no suitable server accepts the service request, and offer the customer the option of either waiting or cancelling the service request.

Advantageously, the controller is arranged to enter the service request into a queue in the event that no suitable server accepts the service request, and transmit the service request to a suitable server when one becomes available.

The customer service point may include display means for displaying information regarding selected products. The system may include a plurality of customer service points.

The customer service system may include a server unit that is constructed and arranged to enable servers to log in and out of the system.

According to another aspect of the invention there is provided a customer service process for allocating servers to customers, the process including receiving a service request from a customer, selecting a server on the basis of the server's suitability for responding to the service request, and transmitting the service request to the selected server.

According to yet another aspect of the invention there is provided a customer service system for allocating servers to customers, the system including a customer service point for receiving a service request from a customer, a controller for selecting a server on the basis of the server's suitability for responding to the service request, and a communications system for transmitting the service request to the selected server.

Various embodiments of the invention will now be described, by way of example, with reference to the accompanying drawings, in which:

Figure 1 is a schematic diagram of a customer service system;

Figure 2 illustrates a customer service point forming part of the system;

Figure 3 illustrates a communicator, forming part of the system;

Figure 4 is an exemplary table illustrating the selection characterisation data for a server;

Figure 5 is an exemplary table illustrating weighting values for different service grades;

Figure 6 is a table illustrating a method of calculating a suitable rating;

Figure 7 is a flow diagram illustrating a method of ranking servers according to their suitability for responding to a customer service request;

Figure 8 is a flow diagram illustrating operation of the customer service system; and

Figure 9 is a flow diagram illustrating operation of a sub-routine for handling waiting customers.

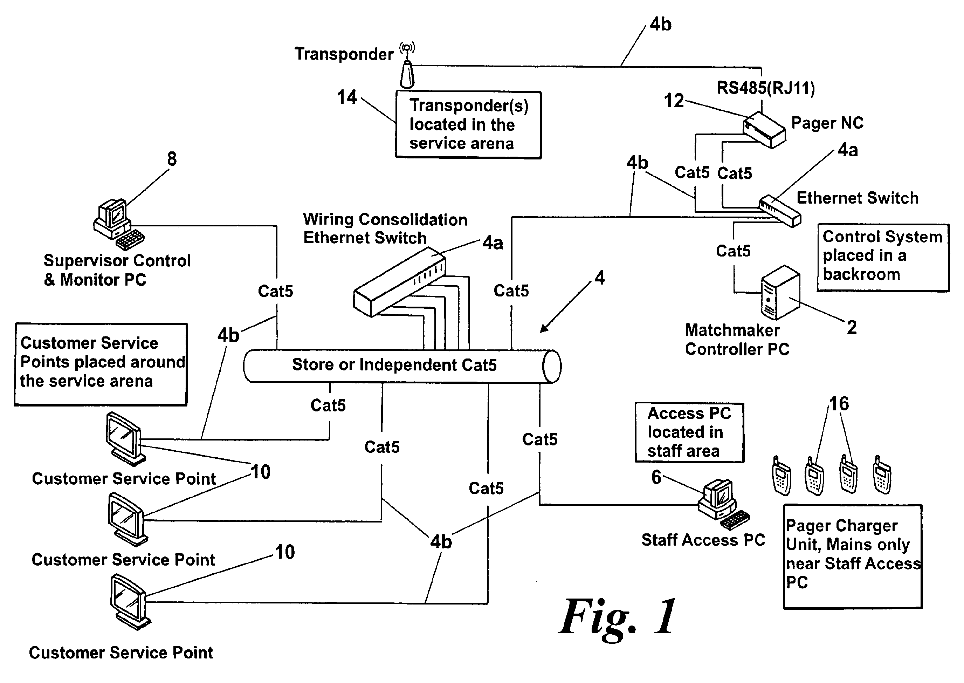

Figure 1 illustrates by way of example the physical architecture of a customer service system. The example is of a system that is suitable for use in a retail store. This may for example be a large electrical goods retailer.

The customer service system includes a system controller computer 2 that is connected via an ethernet network 4 including ethernet switches 4A and cables 4B to a staff access computer 6, a supervisor computer 8 and a plurality of customer service points 10. The system controller computer 2 is also connected via a wireless communications device 12 and a transponder 14 to a plurality of two-way wireless communications devices ("communicators") 16.

The system controller computer 2 will normally be placed in a secure back room to which the public does not have access. It includes a database stored in memory that contains data relating to the servers and product information. The system controller 2 contains the software and processors that control operation of the customer service system.

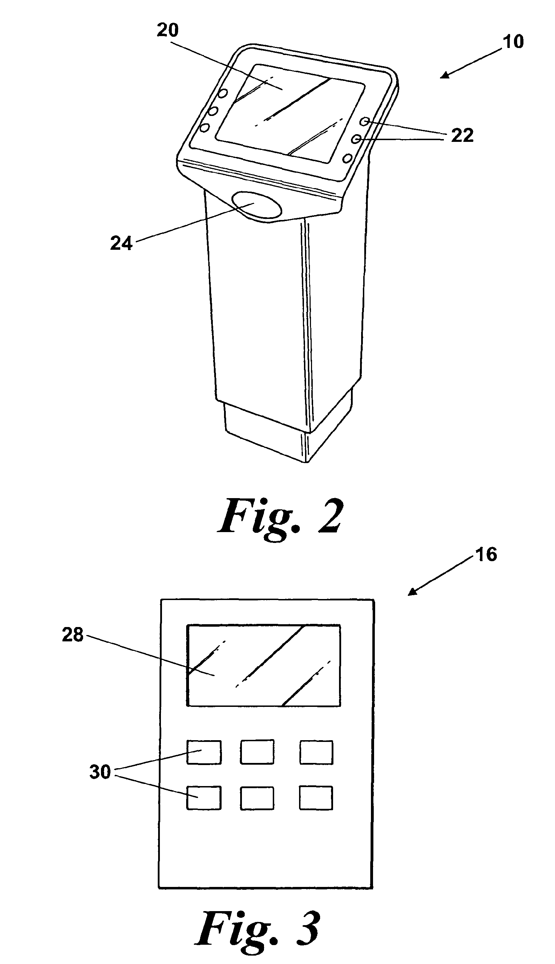

The customer service points 10 are distributed around the public part of the store so that they can be used by customers. An example of a customer service point 10 is shown in Figure 2. The customer service point 10 includes a screen 20 for displaying information and messages, a plurality of buttons 22 on either side of the screen 20 for making selections and sending messages to the system, and a ticket printing machine 24. Preferably, at least one customer service point 10 is provided in each department of the store, so that it can be used for obtaining information about the specific types of product available in that department. For example, in an electrical retailer, the product groups may include cameras, camcorders, hi-fi equipment, computers and so on. The customer service points 10 can communicate via the network 4 with the system controller 2, allowing information and data to be transferred to and from the system controller.

The staff access computer 6 is located in a staff area where it can be accessed by the servers but not by the customers. It is connected via the network 4 to the system controller 2, allowing data and information to be exchanged. The staff access computer 6 allows each server to log on and off the system and to register details of the communicator 16 they are using.

The supervisor computer 8 will usually be located in the public part of the store, but will be used only by the staff supervisor. A supervisor computer 8 is again connected via the network 4 to the system controller 2, allowing for the exchange of data, information and commands. A supervisor can use the supervisor computer 8 to modify operation of the system and to send messages to the servers via the wireless communicators 16. The supervisor can also monitor operation of the system and can make any adjustments necessary to ensure smooth and efficient operation.

The two-way communicators 16 may for example be wireless pager, handheld computers, PDAs (personal digital assistants), or any other suitable wireless device. They allow for two-way communication between the system and the servers, allowing data and messages to be transmitted back and forth via the transponder 14 and the communications system 12. The communicators 16 allow the servers to receive messages from the system and reply as required.

An example of a suitable communicator 16 is shown in Figure 3. It includes a screen 28 and a number of control buttons 30. The screen 28 can be used for displaying messages and menus of commands, which the server can select and transmit in conventional fashion using the controls 30.

Basic operation of the system is as follows.

Upon arriving for work, each server takes a communicator 16 and logs onto the system using the staff access computer 6. The controller 2 records the fact that the server has logged on and registers identification details of the communicator 16 taken by the server. This data is stored on the controller 2, which flags the database to indicate that the server has logged on, and records the identification data of the communicator 16 associated with the server. This process is repeated as each server logs on to the system.

A customer entering the retail store may choose to browse through the products on display. In this case, they will not normally be approached by the servers, who are trained to respond only to specific service requests.

Alternatively, the customer may use one of the customer service points 10 to obtain further information about specific products, or to request assistance from a server. If the customer only requires additional product information, this is transmitted to the customer service point 10 from the controller 2 and displayed on the screen 20 in response to the customer's queries.

If the customer requires assistance from a server, this can also be requested using a customer service point 10. Upon receiving a request for assistance, the system sends a message to the customer service point 10 asking the customer to indicate the product or product group in which the customer is interested) and type of assistance required (for example basic information or advice about the product, a full product demonstration, or a purchase). The customer enters this information using the customer service point 10 and the controller 2 then uses that information to select the server who is best suited for responding to the service request. Suitability may depend on various factors including the server's knowledge of the product, the nature of the service request, the sales conversion rate of the server and so on. The process for selecting a server is described in more detail below.

Once the most suitable server has been selected, the system sends a message to the selected server via the server's communicator 16, indicating details of the service request. Those details may include an identification of the product, the nature of the service request (i.e. the service grade), identification of the customer service point from which the request was made, and so on. The server can either accept or decline the service request by sending an appropriate message back to the controller 2 from the communicator 16. If the server accepts the service request, the controller 2 sends a message to the customer via the customer service point 10, which prints a ticket to confirm that the request has been accepted. The ticket may also contain other useful information, such as the name of the selected server. The server then goes to the identified customer service point 10 to meet the customer and deal with the request.

If the server declines the request, the controller 2 passes the request to the next most suitable server, and so on until the request is accepted. If no suitable server is available, the controller may send a message to the customer via the customer service point 10, indicating an estimated wait time. The customer may then choose either to wait or to cancel the service request. If the customer indicates a willingness to wait, this is noted by the controller 2, which transmits the service request to the next suitable server who becomes available. The controller 2 may also send a message to the supervisor via the supervisor control computer 8, so that the supervisor can take appropriate action. This may include adjusting the parameters of the customer service system to ensure that service requests are dealt with more quickly, or making more servers available.

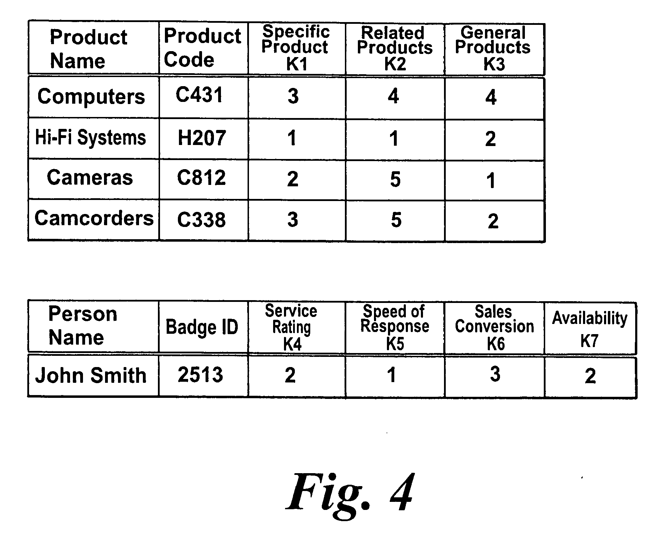

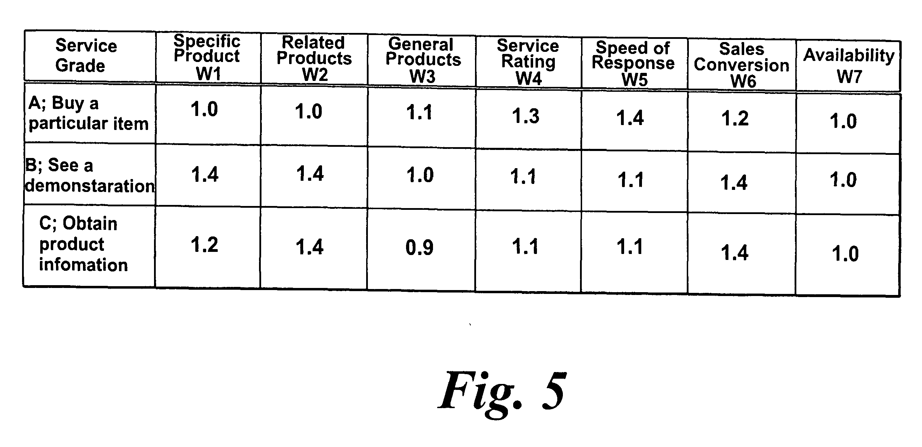

The process for selecting servers on the basis of their suitability for handling specific service requests will now be described with reference to Figures 4 and 5.

Each server is assessed and categorised for their availability, knowledge and skill according to a set of selection categories. This data is stored in the controller 2 in the form of a two dimensional table of selection values for each individual server. The categories that are assessed correspond to the availability of the server and areas of knowledge and skill that are expected to contribute to the overall service provision and customer experience.

The selection categories may for example be as follows:

$K_1$    specific product knowledge
$K_2$    related products knowledge
$K_3$    general product knowledge
$K_4$    service rating
$K_5$    speed of response
$K_6$    sales conversion rate
$K_7$    availability

The seven selection categories are divided into two groups. The first three selection categories $K_1$ to $K_3$ all relate to the individual server's knowledge of particular products and product groups. For example, if the product group is cameras, the first category $K_1$ may relate to specific product knowledge, such as knowledge of digital cameras. The second selection category $K_2$ may concern knowledge of related products, for example photo printers, computers and photo imaging software. The third category $K_3$ may be concerned with general product knowledge, including for example knowledge of associated products and services such as photo printing services, repair and maintenance services, and extended warranties.

The other selection categories $K_4$ to $K_7$ all relate to the server's skill levels and other attributes in a number of areas that are not product related, but are specific to that server. Thus, in the example, the $K_4$ selection category is a service rating, which is a measure of customer satisfaction. $K_5$ measures average speed of response to customer service requests, and $K_6$ is a measure of the sales conversion rate, i.e. the proportion of service requests that result in a sale. Alternatively, it may be a measure of added value, for additional goods and services sold to the customer.

$K_7$ is a measure of the server's availability. The availability rating may be determined in various different ways. For example, it may be used as a measure of the server's enthusiasm and willingness to serve. Thus, a server who is always keen to serve will be given a high availability rating, whereas a server who is less enthusiastic and perhaps takes numerous unauthorised breaks while on duty will be given a lower rating. The enthusiastic server will then be more likely to receive a service request and so will benefit accordingly from any company incentive scheme.

Alternatively, the availability rating may be constantly updated, according to the task with which the server is engaged. Thus, the availability rating may be high if a server is available and unoccupied and therefore ready to serve a customer, or it may be low if the server is engaged on another task, for example checking stock or training staff, but is still available to serve customers if the need arises.

The selection categories for each server are stored in a database held on the controller 2. For each server, two sets of data are stored, as illustrated in Figure 4. The first set contains the server's selection values $K_1$ to $K_3$ for different product ranges, while the second set contains the server's personal skill and availability values, for categories $K_4$ to $K_7$. These values may be updated from time-to-time as the server's skill levels and knowledge change.

The value range for each selection value is dependent on the implementation of the customer service system. In this example, a range of 0 to 5 is used. It is preferable that each K value has the same range.

In the example, the server **John Smith,** has a level **3** specific product knowledge value for computers and camcorders, which indicates that he is capable of providing at least basic information about each of those product groups. The level **2** value for cameras suggests that he has a lower level of knowledge in relation to those goods, but is still probably able to provide basic advice. His specific product knowledge value of **1** for hi-fi systems indicates that he has little knowledge of those products and is therefore unable to handle any but the most basic of service requests (for example checking stock levels or taking an order for the product).

For each store, the products are classified into a manageable number of product groups having unique identifiers, for example as indicated by the product codes in Figure 4. Each server also has a unique identifier, for example a badge ID.

When a customer registers a service request, this will include an indication both of the product group in which the customer is interested (for example computers, hi-fi systems, cameras or camcorders) and an indication of the service grade required. The service grade indicates the type of service required, such as a demonstration of the product, further information about the product or simply purchase of the product. Both of these pieces of information are used by the customer service system when selecting a server who is suitable for responding to the service request.

The product information determines which set of product knowledge values is relevant for each server. In the example illustrated in Figure 4, if the customer is interested in cameras (product code C812) the product knowledge values $K_1$ to $K_3$ for **John Smith** would be 2, 5 and 1 respectively. The other selection values $K_4$ to $K_7$ do not depend on the selected product and in the example for **John Smith** will be **2, 1, 3** and **2** respectively.

The service grade input indicates the kind of assistance requested by the customer and this information is used to determine a set of weighting values that influence the relative importance of the various selection values for each server.

For example, in a retail store, there may be three selectable service grades as follows:

A    buy a particular item;
B    see a specific product demonstration; and
C    obtain product information.

Other measures of complexity could be used, such as the quantity of items involved or the effort involved in serving the customer, if that is more appropriate to the retailer.

For each of these service grades, the different selection categories are rated as more or less important in contributing towards the best overall service. This is reflected in a table of weighting values having one row for each service grade, as shown in Figure 5. These weighting values give a measure $W_i$ of how much each selection category is considered to contribute to the provision of each type of service grade. The weighting values that are selected depend on the environment and an assessment made by the management, and so depend on the situation in which the customer service system is situated.

A neutral value of **1.0** is set as the starting point for the weighting values. If all the weighting values are set to **1.0** then all selection values will have an equal importance and will contribute equally to the service provision. As understanding of the retail environment is gained, the weighting value can be adjusted to reflect the policy and judgement of the supervising management.

The weighting values for a selected service grade are applied by multiplying them with the selection values in the corresponding selection categories for the selected product or product group. This gives a weighted selection value in each selection category.

The weighted selection value $WK_i$ in each selection category i can be represented as

$$WK_i = W_i \times K_i$$

where $W_i$ is the weighting value and $K_i$ is the selection value in the category i.

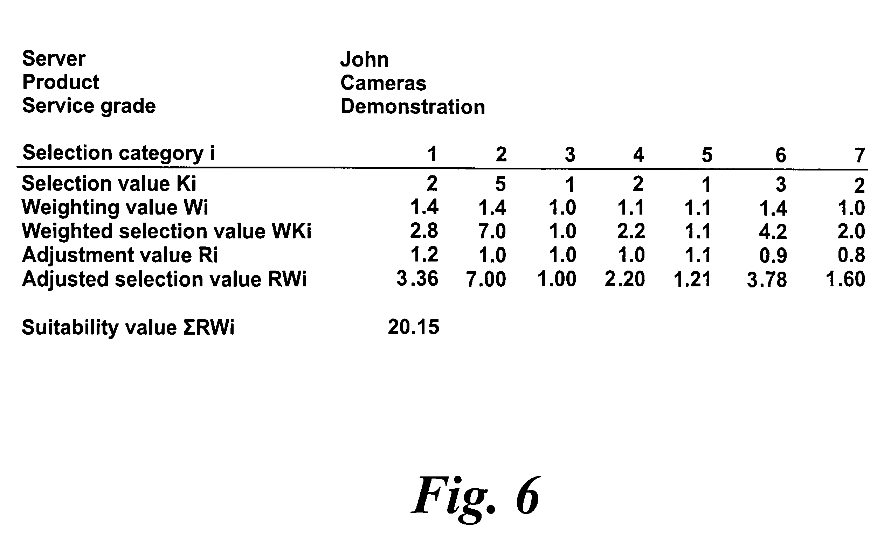

Figure 6 illustrates an example in which the server is **John Smith,** the product group is **cameras** and the service grade is **demonstration.** In each selection category i, the weighted selection value $WK_i$ is equal to the selection value $K_i$ multiplied by the weighting value $W_i$.

Optionally, the weighted selection values may be subjected to a further adjustment process. This may be useful for example where a retail company has a number of stores in different geographical locations or trading in different circumstances and there is a need to adjust the weighted selection values for each store according to its particular circumstances. In the adjustment process a set of adjustment values is applied by multiplying the adjustment values with the weighted selection values in each of the selection categories. The adjusted selection values $RW_i$ can then be obtained by applying the expression $RW_i = R_i \times WK_i$ for each of the selection categories i.

The adjustment process is illustrated in the last two lines of the previous table (Figure 6). It can be seen that for each selection category i the adjusted selection value $RW_i$ is equal to the weighted selection value $WK_i$ multiplied by the ranking value $R_i$.

Finally, a suitability value for the server is obtained by summing the adjusted selection values. The suitability value $S_p$ for the server P is thus obtained from the expression

$$S_p = \sum RW_i \text{ for } i = 1 \text{ to } 7.$$

Alternatively, if the optional adjustment process is omitted, the suitability value for the server is obtained by summing the weighted selection values. The suitability value $S_p$ for the server P is then obtained from the expression $S_p = \Sigma Wk_i$ for i = 1 to 7.

This process is carried out for all of the servers who are logged in to the system. The suitability values are then placed in numerical order, the server with the highest suitability value being deemed the most suitable to deal with the service request, while the server with the lowest suitability value is deemed the least suitable.

If two or more servers have an identical suitability value, a further tie-break process may be applied to separate them. This may for example be decided on the basis of the server who has served the fewest customers in the current session, or the server who has waited longest since last serving a customer. If neither of these processes reduces the choice to a single server, one of the remaining servers may be picked at random using a pseudo random number generator, so that each server in the ratings match will have an equal likelihood of being chosen.

Once the suitability ranking of the servers has been established, the server ranked first is sent a message via the communicator, offering him or her an opportunity to respond to the service request. If the server declines the service request, it is passed to the server who was ranked next most suitable. This will continue until a suitable available server accepts the service request. The system may however include a cut-off process, which prevents the service request being offered to servers whose suitability value falls below a predetermined threshold.

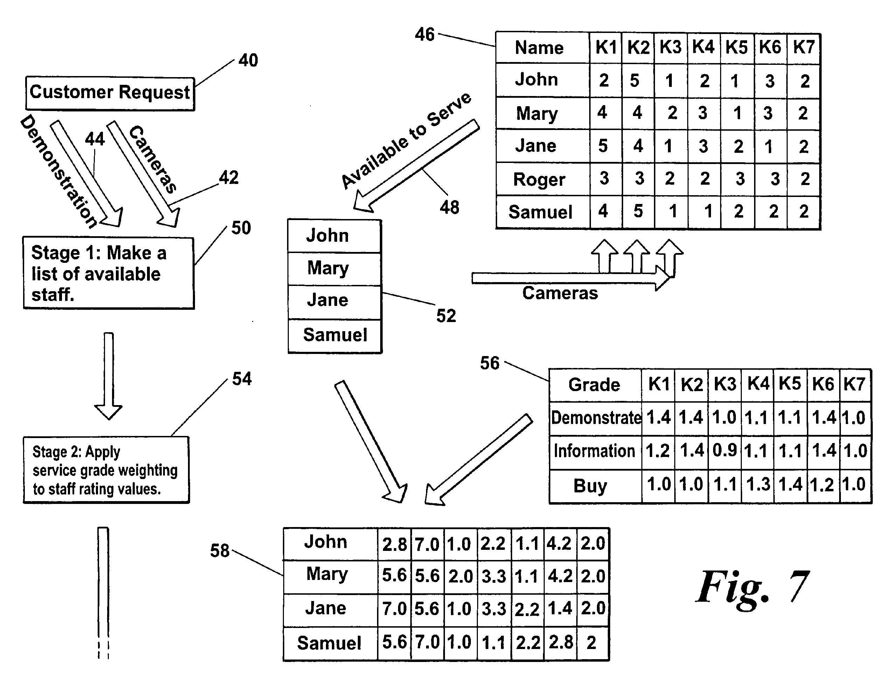

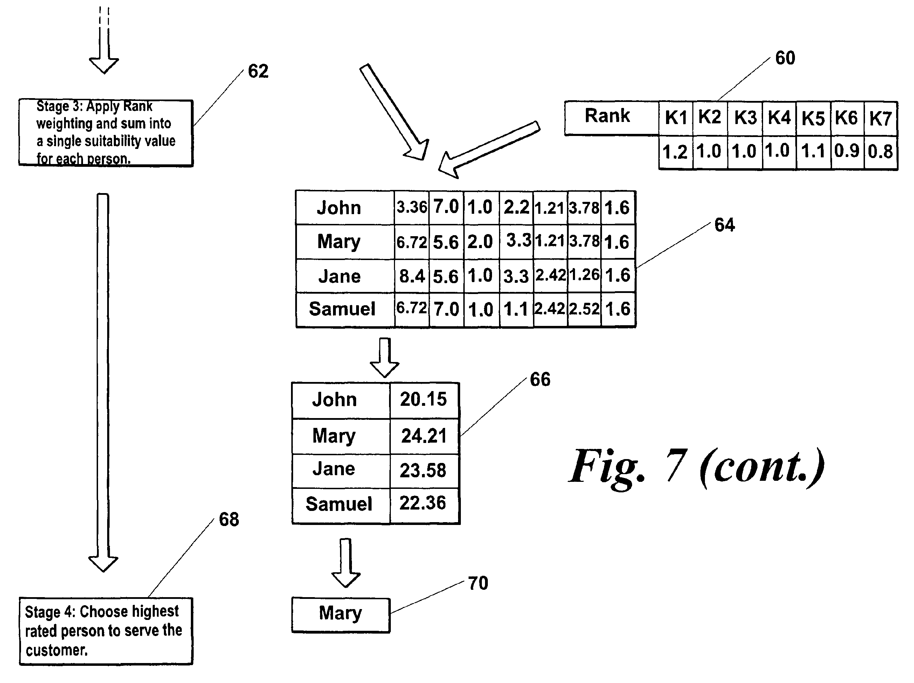

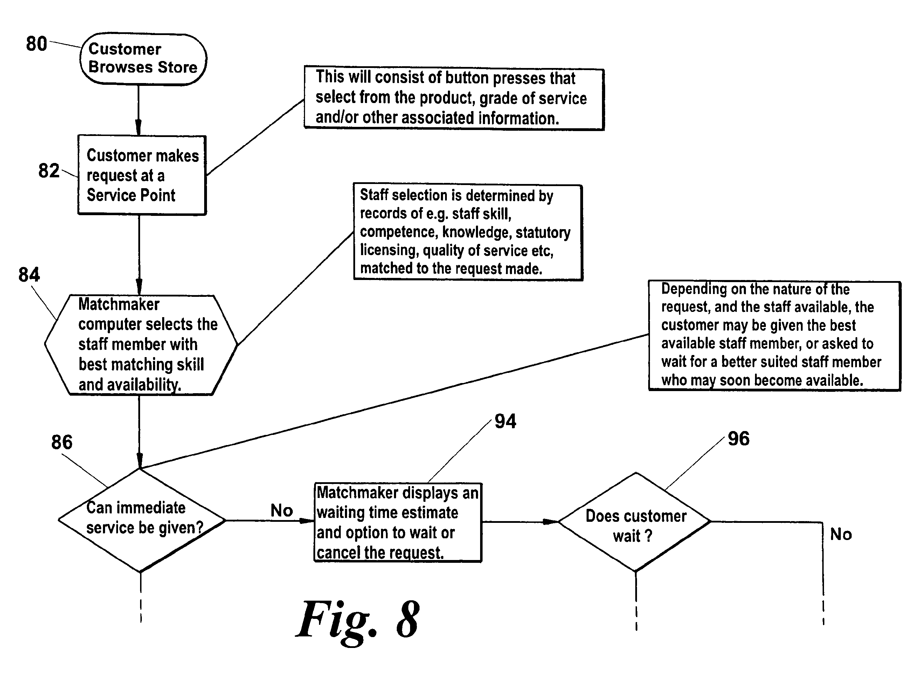

An example illustrating operation of the server selection process is shown in Figure 7. In the first step of the process the system receives a service request 40 that includes product data 42 (for example **cameras)** and service grade data 44 (for example a request for a **demonstration).**

The controller 2 includes a database that contains selection value data for all of the servers (e.g. **John, Mary, Jane, Roger** and **Samuel)** in each of the product groups. The controller 2 extracts from that database the selection values for the specified product group **(cameras)** and assembles those values into a table 46.

The system then checks 48 which servers have logged in to the system and are available to serve, and compiles 50 a list 52 of those servers. In the example, the server **Roger** has not logged in and the list of available servers 52 therefore consists only of **John, Mary, Jane** and **Samuel.**

In the next step 54, the system uses the requested service grade 44 to extract the appropriate service grade weighting values from the table of weighting values 56. In the example, the service grade is a request for a product demonstration and the service grade values are therefore 1.4, 1.4, 1.0, 1.1, 1.1, 1.4 and 1.0. The extracted service grade values are then applied to the selection values for each of the servers, producing a set of weighted selection values 58.

If required, the optional adjustment values 60 are applied 62 to the weighted selection values, producing a set of adjusted selection values 64. The suitability value for each server is then extracted by summing the adjusted selection values. This produces a suitability value 66 for each of the servers. Finally, the suitability values are placed in numerical order 68 and the server 70 with the highest suitability value is chosen and requested to respond to the service request.

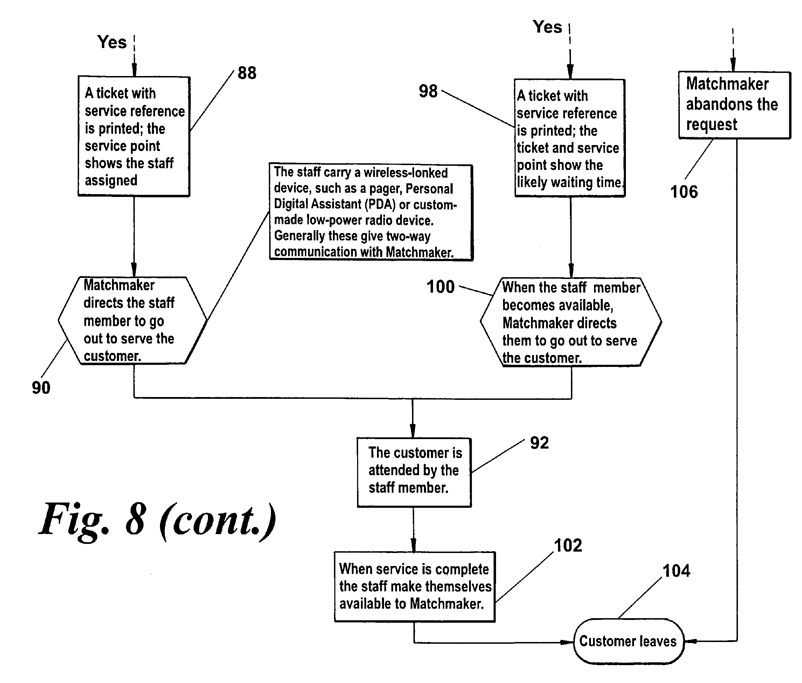

Operation of the customer service system is illustrated in more detail in Figure 8. Initially 80, a customer enters the store and browses through the available products. When the customer requires assistance, he or she makes a service request 82 at one of the service points within the store. The service request is entered by pressing buttons on the service point to select from menus of available options, and includes product and service grade data and/or other associated information. The service request is transmitted to the controller computer, which logs details of the service request and implements the server matching process 84 to identify a suitable server. Subsequent operation depends on whether a suitable server is available 86.

If a suitable server is available and accepts the service request, a ticket is printed at the service point with a service reference. The name of the server assigned to serve the customer is displayed on the service point 88. The name of the server may also be printed on the ticket. The allocated server is then directed to the customer 90 and the customer is attended by the server 92.

If no suitable server is available, or if no server accepts the service request, the controller calculates an estimated waiting time based for example on the number of servers logged in to the system, the number of waiting customers and the average service time. The estimated wait time is displayed on the service point 94 and the customer is offered the choice of either waiting to be served, or cancelling the service request. The customer indicates his or her choice by pressing buttons on the service point 96.

If the customer decides to wait, a ticket is printed at the service point with a service reference and the estimated waiting time. The waiting time may also be displayed on the service point 98. When a suitable server becomes available details of the queued service request are immediately transmitted to the server and if the service request is accepted, the server is directed to the customer 100 and attends to the customer's requirements 92.

When service is complete 102 the server sends a signal to the controller to indicate that he/she is again available to server 102 and the customer leaves 104. Alternatively, if the customer decides not to wait 96, the service request is cancelled 106 and the customer leaves 104.

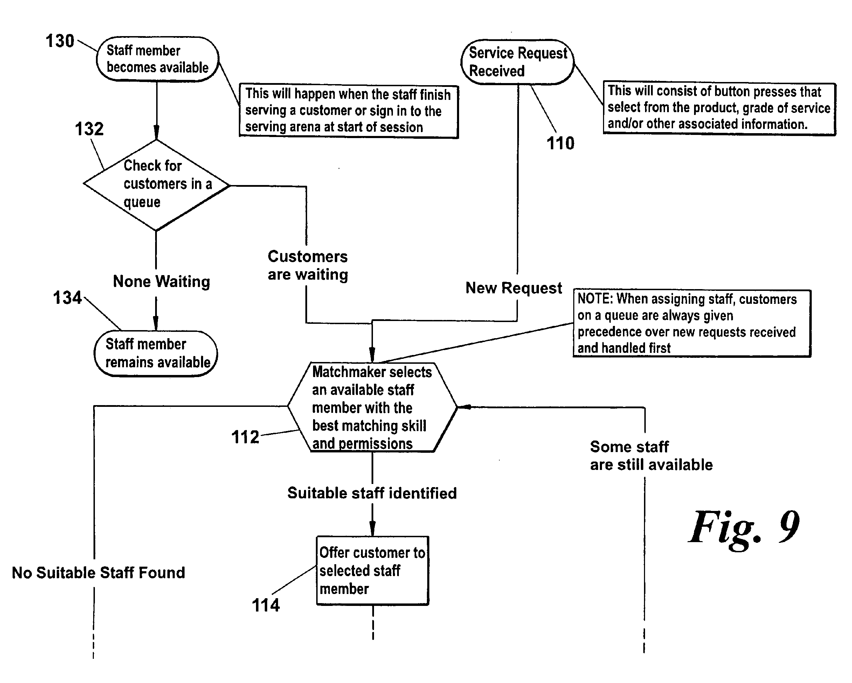

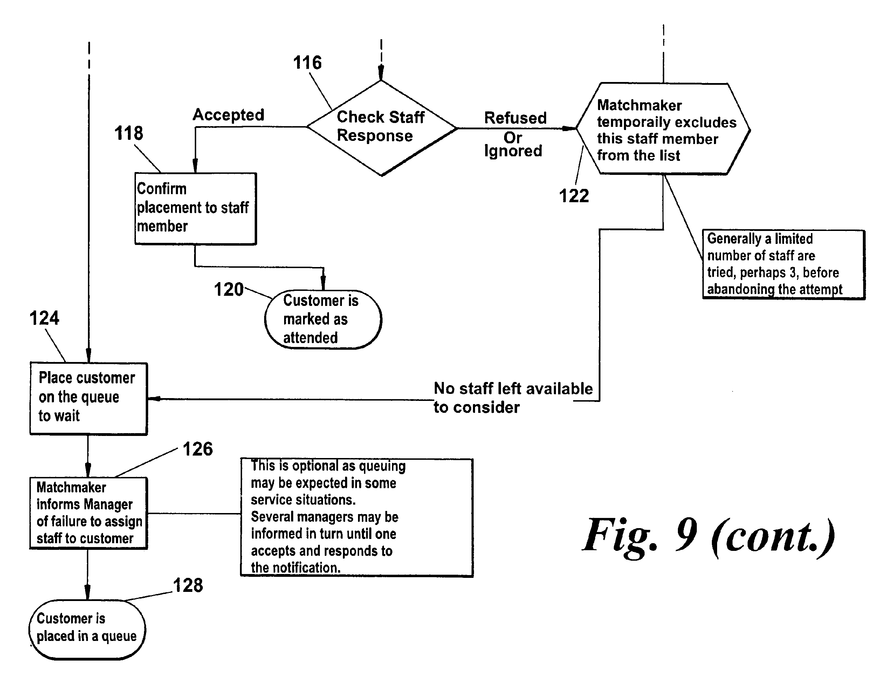

The way in which the system handles queuing customers is illustrated in Figure 9.

When a service request is received 110, the system attempts 112 to match the customer with an available server having the highest suitability rating for the specific service request.

When the most suitable server has been identified the service request is offered 114 to the selected server. The system then waits 116 for a response from the server. If the service request is accepted, the server is directed 118 to the customer and the customer is marked 120 as attended.

If the service request is refused or if no response is received from the server within a predetermined time-out period, the selected server is temporarily removed 122 from the list of available servers. If one or more servers remain available, the system then repeats its attempt 112 to match the customer with the remaining servers. This process 112, 114, 116, 120 may be repeated until no servers are left, or for a limited number of attempts (for example three attempts) before the system abandons its attempt to match a server to the customer. The customer is then placed 124 in a queue to wait for a suitable server.

If, while attempting 112 to match a server to the customer, it is found that the suitability rating of all available servers falls below a predetermined threshold, indicating that no suitable servers are available, the customer is again placed in the queue 124.

Optionally, the system may inform 126 a manager or supervisor of a failure to assign a server to the customer, so that the manager/supervisor can take appropriate action. This will not always be required, as in some situations queuing might be expected. Alternatively, a message may be triggered only if the number of queuing customers for the estimated waiting time exceeds a predetermined threshold. In the meantime, the customer is held 128 in the queue.

As soon as a server becomes available 130 (for example when a server finishes serving a customer or when a new server logs in), the system immediately checks 132 for customers waiting in the queue. If no customers are waiting, the system then waits for a service request and the server remains available 134. If there is a customer in the queue, the system attempts 112 to match the customer with the available server or servers. If a suitable server is available, the service request is offered to the server.

If no suitable server is available, the first customer will remain in the queue. If there is another customer in the queue, the system may then attempt to match that customer with an available server and if a suitable server is available, it will offer the customer to the server. Meanwhile, the first customer will remain in the queue until a suitable server becomes available. This process may be repeated with other customers waiting in the queue.

Whenever there are customers in the queue, their service requests will take priority over service requests received from new customers. The system will therefore always attempt to match a server with queuing customers before attempting a match with new customers.

When there is more than one customer in the queue, these may be prioritised either chronologically (so that the system attempts to find a match with the customer who has been queuing longest, before attempting a match with any other customers), or according to some other criteria. For example, a customer who simply wishes to purchase a product (as indicated by their service request) may take priority over another customer who requires a full product demonstration. The way in which queuing customers are prioritised can be configured according to the requirements of the retailer.

Although the customer service system is described above mainly in relation to its use in a retail environment, the system may also be used in other customer service environments.

For example, the system may be used in a bank, for arranging meetings between customers and bank staff with suitable levels of skill and knowledge to deal with the customer's requirements.

In a banking situation, the "products" may consist of a wide range of products or services including, for example, loans and mortgages, current accounts, savings, share dealing, credit and debit cards, banking for children or youths, business banking and so on. The "service grades" may include, for example, taking specific action (such as opening an account, buying or selling shares etc), or providing general information about products and services.

The selection categories may also be varied from those described above, for example $K_1$ may relate to the server's knowledge of specific financial products and services, whereas $K_2$ may relate to the server's knowledge of related products and services. Optionally, the $K_3$ selection category may be used as an overriding permit/deny filter, to prevent unqualified servers from responding to certain specific service requests. This may be necessary for example where financial regulations require financial advice in relation to specific financial products and services to be provided only by suitably qualified staff.

The remaining selection categories $K_4$ to $K_7$ will generally relate to personal skill and availability values, as in the previous example.

Operation of the customer service systems in a banking system will generally be similar to that described above. However, instead of having numerous customer service points that can be operated by the customers, it is more likely that there will be single customer service point, operated by a customer service representative. The customer service representative will greet bank customers on arrival and enter service requests on the customers' behalf, according to their requirements. If a server is not immediately available to respond to the service request, the customer will be invited to wait in a designated waiting area, after having been issued with a ticket carrying a service reference.

If the $K_3$ selection category is used as an absolute allow/deny filter, the server selection process will be modified slightly to include an additional step in which the $K_3$ selection category of each server is examined and any servers that are not permitted to provide the specified advice are removed from the list of available servers. Server selection will then continue only with the remaining servers, who have the required qualifications.

If a suitable server is not immediately available and the customer does not wish to wait for a server to become available, the system may also offer the option of arranging an appointment to see a specified server at some future date.

In certain circumstances, a simpler customer service system than those described above may be adequate. At its most rudimentary level, the system may be designed to receive a service request that contains no product or service grade data (only the fact that services requested being recorded), to select a server on the basis of suitability, where suitability depends only on availability, and to transmit the service request to the server. This system may be suitable in very simple situations, where all the servers are equally qualified to handle service requests and allocation is decided purely on the basis of availability (selection value $K_7$). Optionally, one or more of the selection values $K_3$ to $K_6$ may also be taken into account.

At a slightly more sophisticated level, for example in a shoe shop where no specialist technical knowledge of the products is generally required, the service request may include service grade data only to indicate, for example, whether or not a qualified fitter is required. The system may therefore be tailored to the particular circumstances in which it is to be used.

**Claims**

1. A customer service process for allocating servers to customers, the process including receiving a service request that includes data identifying a requested service grade, retrieving from a database a set of selection values for each of a plurality of servers and a set of weighting values, wherein the set of weighting values is selected from a plurality of sets on the basis of the requested service grade, obtaining a set of weighted selection values for each server by applying the set of weighting values to each set of selection values, obtaining from the set of weighted selection values a suitability value for each server, and selecting a server on the basis of the obtained suitability values.

2. A customer service process according to claim 1, in which the service request includes data identifying a product, and the step of retrieving a set of selection values includes selecting a set of selection values on the basis of the identified product.

3. A customer service process according to claim 1 or claim 2, in which the step of obtaining a set of weighted selection values for each server includes multiplying each selection value by a corresponding weighting value.

4. A customer service process according to any one of the preceding claims, in which the step of obtaining a suitability value for each server includes summing the weighted selection values.

5. A customer service process according to any one of the preceding claims, including retrieving from a database a set of adjustment values, obtaining a set of adjusted selection values for each server by applying the set of adjustment values to each set of weighted selection values, and obtaining from the set of adjusted selection values a suitability value for each server.

6. A customer service process according to claim 5, in which the step of obtaining a set of adjusted selection values for each server includes multiplying each weighted selection value by a corresponding adjustment value.

7. A customer service process according to claim 5 or claim 6, in which the step of obtaining a suitability value for each server includes summing the adjusted selection values.

8. A customer service process according to any one of the preceding claims, in which the server with the highest suitability value is selected.

9. A customer service process according to any one of the preceding claims, in which at least one of the selection values relates to the availability of the servers.

10. A customer service process according to any one of the preceding claims, in which at least one of the selection values relates to product knowledge.

11. A customer service process according to any one of the preceding claims, in which at least one of the selection values relates to a server skill.

12. A customer service process according to any one of the preceding claims, the process including checking a qualification rating for each server and excluding from selection any server without a suitable qualification rating.

13. A customer service process according to any one of the preceding claims, the process including transmitting the service request to the selected server.

14. A customer service process according to claim 13, including checking for acceptance by the selected server of the transmitted service request.

15. A customer service process according to claim 14, including selecting and transmitting the service request to another server if the originally selected server does not accept the transmitted service request.

16. A customer service process according to claim 14 or claim 15, including notifying the customer when a service request is accepted.

17. A customer service process according to any one of claims 14 to 16, including notifying the customer in the event that no suitable server accepts the service request, and offering the customer the option of either waiting or cancelling the service request.

18. A customer service process according to claim 17, including entering the service request into a queue in the event that no suitable server accepts the service request, and transmitting the service request to a suitable server when one becomes available.

19. A customer service system for allocating servers to customers, the system including a customer service point for receiving a service request that includes data identifying a requested service grade, a controller for selecting a server on the basis of the server's suitability for responding to the service request, and a database containing a set of selection values for each of a plurality of servers and a plurality of sets of weighting values, wherein the controller is constructed and arranged to retrieve from the database a set of selection values for each server and a set of weighting values that is selected on the basis of the requested service grade, to obtain a set of weighted selection values for each server by applying the set of weighting values to each set of selection values, to obtain from the set of weighted selection values a suitability value for each server, and to select a server on the basis of the obtained suitability values.

20. A customer service system according to claim 19, including a communications system for transmitting the service request to the selected server.

21. A customer service system according to claim 20, wherein the communications system is constructed and arranged to enable two-way communication between the controller and the servers.

22. A customer service system according to claim 21, wherein the communications system is constructed and arranged to enable the servers to accept or reject a service request.

23. A customer service system according to claim 22, in which the controller is constructed and arranged to check for acceptance by the selected server of the transmitted service request.

24. A customer service system according to claim 23, in which the controller is constructed and arranged to select and transmit the service request to another server if the originally selected server does not accept the transmitted service request.

25. A customer service system according to claim 23 or claim 24, in which the controller is constructed and arranged to notify the customer when a service request is accepted.

26. A customer service system according to any one of claims 23 to 25, in which the controller is constructed and arranged to notify the customer in the event that no suitable server accepts the service request, and offer the customer the option of either waiting or cancelling the service request.

27. A customer service system according to any one of claims 23 to 26, in which the controller is constructed and arranged to enter the service request into a queue in the event that no suitable server accepts the service request, and transmit the service request to a suitable server when one becomes available.

28. A customer service system according to any one of claims 19 to 27, wherein the customer service point includes display means for displaying information regarding selected products.

29. A customer service system according to any one of claims 19 to 27, including a plurality of customer service points.

30. A customer service system according to any one of claims 19 to 29, including a server unit that is constructed and arranged to enable servers to log in and out of the system.

31. A customer service process for allocating servers to customers, the process including receiving a service request from a customer, selecting a server on the basis of the server's suitability for responding to the service request, and transmitting the service request to the selected server.

**32.** A customer service system for allocating servers to customers, the system including a customer service point for receiving a service request from a customer, a controller for selecting a server on the basis of the server's suitability for responding to the service request, and a communications system for transmitting the service request to the selected server.

Transponder

**4b**

**14** Transponder(s) located in the service arena

**12** RS485(RJ11)

Pager NC

**8**

Supervisor Control & Monitor PC

Wiring Consolidation Ethernet Switch

**4a**

**4b** Cat5 Cat5

**4a**

Ethernet Switch

Control System placed in a backroom

Cat5

**4b**

Cat5

**4**

Customer Service Points placed around the service arena

Cat5

**4b**

Store or Independent Cat5

Cat5

Matchmaker Controller PC

**2**

Cat5

Cat5

Customer Service Point **10**

Cat5

**4b**

Cat5

Access PC located in staff area

**16**

Customer Service Point **10**

**6**

Staff Access PC

Pager Charger Unit, Mains only near Staff Access PC

Customer Service Point

*Fig. 1*

EP 1 835 450 A1

**Fig. 2**

**Fig. 3**

| Product Name | Product Code | Specific Product K1 | Related Products K2 | General Products K3 |
|---|---|---|---|---|
| Computers | C431 | 3 | 4 | 4 |
| Hi-Fi Systems | H207 | 1 | 1 | 2 |
| Cameras | C812 | 2 | 5 | 1 |
| Camcorders | C338 | 3 | 5 | 2 |

| Person Name | Badge ID | Service Rating K4 | Speed of Response K5 | Sales Conversion K6 | Availability K7 |
|---|---|---|---|---|---|
| John Smith | 2513 | 2 | 1 | 3 | 2 |

*Fig. 4*

EP 1 835 450 A1

| Service Grade | Specific Product W1 | Related Products W2 | General Products W3 | Service Rating W4 | Speed of Response W5 | Sales Conversion W6 | Availability W7 |
|---|---|---|---|---|---|---|---|
| A; Buy a particular item | 1.0 | 1.0 | 1.1 | 1.3 | 1.4 | 1.2 | 1.0 |
| B; See a demonstaration | 1.4 | 1.4 | 1.0 | 1.1 | 1.1 | 1.4 | 1.0 |
| C; Obtain product infomation | 1.2 | 1.4 | 0.9 | 1.1 | 1.1 | 1.4 | 1.0 |

*Fig. 5*

EP 1 835 450 A1

| | | | | | | | |
|---|---|---|---|---|---|---|---|
| Server | John | | | | | | |
| Product | Cameras | | | | | | |
| Service grade | Demonstration | | | | | | |

| Selection category i | 1 | 2 | 3 | 4 | 5 | 6 | 7 |
|---|---|---|---|---|---|---|---|
| Selection value Ki | 2 | 5 | 1 | 2 | 1 | 3 | 2 |
| Weighting value Wi | 1.4 | 1.4 | 1.0 | 1.1 | 1.1 | 1.4 | 1.0 |
| Weighted selection value WKi | 2.8 | 7.0 | 1.0 | 2.2 | 1.1 | 4.2 | 2.0 |
| Adjustment value Ri | 1.2 | 1.0 | 1.0 | 1.0 | 1.1 | 0.9 | 0.8 |
| Adjusted selection value RWi | 3.36 | 7.00 | 1.00 | 2.20 | 1.21 | 3.78 | 1.60 |

Suitability value $\Sigma$RWi    20.15

# *Fig. 6*

EP 1 835 450 A1

| Name | K1 | K2 | K3 | K4 | K5 | K6 | K7 |
|---|---|---|---|---|---|---|---|
| John | 2 | 5 | 1 | 2 | 1 | 3 | 2 |
| Mary | 4 | 4 | 2 | 3 | 1 | 3 | 2 |
| Jane | 5 | 4 | 1 | 3 | 2 | 1 | 2 |
| Roger | 3 | 3 | 2 | 2 | 3 | 3 | 2 |
| Samuel | 4 | 5 | 1 | 1 | 2 | 2 | 2 |

46

Available to Serve 48

Cameras

| 52 |
|---|
| John |
| Mary |
| Jane |
| Samuel |

| Grade | K1 | K2 | K3 | K4 | K5 | K6 | K7 |
|---|---|---|---|---|---|---|---|
| Demonstrate | 1.4 | 1.4 | 1.0 | 1.1 | 1.1 | 1.4 | 1.0 |
| Information | 1.2 | 1.4 | 0.9 | 1.1 | 1.1 | 1.4 | 1.0 |
| Buy | 1.0 | 1.0 | 1.1 | 1.3 | 1.4 | 1.2 | 1.0 |

56

| John | 2.8 | 7.0 | 1.0 | 2.2 | 1.1 | 4.2 | 2.0 |
|---|---|---|---|---|---|---|---|
| Mary | 5.6 | 5.6 | 2.0 | 3.3 | 1.1 | 4.2 | 2.0 |
| Jane | 7.0 | 5.6 | 1.0 | 3.3 | 2.2 | 1.4 | 2.0 |
| Samuel | 5.6 | 7.0 | 1.0 | 1.1 | 2.2 | 2.8 | 2 |

58

40 **Customer Request**

42 Cameras

44 Demonstration

50 **Stage 1: Make a list of available staff.**

54 Stage 2: Apply service grade weighting to staff rating values.

*Fig. 7*

**Rank** — 60

| | K1 | K2 | K3 | K4 | K5 | K6 | K7 |
|---|---|---|---|---|---|---|---|
| | 1.2 | 1.0 | 1.0 | 1.0 | 1.1 | 0.9 | 0.8 |

64

| | | | | | | |
|---|---|---|---|---|---|---|
| John | 3.36 | 7.0 | 1.0 | 2.2 | 1.21 | 3.78 | 1.6 |
| Mary | 6.72 | 5.6 | 2.0 | 3.3 | 1.21 | 3.78 | 1.6 |
| Jane | 8.4 | 5.6 | 1.0 | 3.3 | 2.42 | 1.26 | 1.6 |
| Samuel | 6.72 | 7.0 | 1.0 | 1.1 | 2.42 | 2.52 | 1.6 |

66

| | |
|---|---|
| John | 20.15 |
| Mary | 24.21 |
| Jane | 23.58 |
| Samuel | 22.36 |

70

| Mary |
|---|

62

Stage 3: Apply Rank weighting and sum into a single suitability value for each person.

68

Stage 4: Choose highest rated person to serve the customer.

*Fig. 7 (cont.)*

19

**80** — Customer Browses Store

This will consist of button presses that select from the product, grade of service and/or other associated information.

**82** — Customer makes request at a Service Point

Staff selection is determined by records of e.g. staff skill, competence, knowledge, statutory licensing, quality of service etc, matched to the request made.

**84** — Matchmaker computer selects the staff member with best matching skill and availability.

Depending on the nature of the request, and the staff available, the customer may be given the best available staff member, or asked to wait for a better suited staff member who may soon become available.

**86** — Can immediate service be given?

No

**94** Matchmaker displays an waiting time estimate and option to wait or cancel the request.

**96** Does customer wait ?

No

*Fig. 8*

Yes

A ticket with service reference is printed; the ticket and service point show the likely waiting time.

98

When the staff member becomes available, Matchmaker directs them to go out to serve the customer.

100

Matchmaker abandons the request

106

The staff carry a wireless-lonked device, such as a pager, Personal Digital Assistant (PDA) or custom-made low-power radio device. Generally these give two-way communication with Matchmaker.

88

Yes

A ticket with service reference is printed; the service point shows the staff assigned

Matchmaker directs the staff member to go out to serve the customer.

90

The customer is attended by the staff member.

92

When service is complete the staff make themselves available to Matchmaker.

102

Customer leaves

104

*Fig. 8 (cont.)*

**Fig. 9**

130 — Staff member becomes available

This will happen when the staff finish serving a customer or sign in to the serving arena at start of session

Service Request Received

This will consist of button presses that select from the product, grade of service and/or other associated information.

110

132 — Check for customers in a queue

None Waiting

Customers are waiting

New Request

NOTE: When assigning staff, customers on a queue are always given precedence over new requests received and handled first

134 — Staff member remains available

112 — Matchmaker selects an available staff member with the best matching skill and permissions

Some staff are still available

Suitable staff identified

No Suitable Staff Found

114 — Offer customer to selected staff member

**116** Check Staff Response

Accepted

**118** Confirm placement to staff member

**120** Customer is marked as attended

Refused Or Ignored

Matchmaker temporaily excludes this staff member from the list

**122**

Generally a limited number of staff are tried, perhaps 3, before abandoning the attempt

No staff left available to consider

**124** Place customer on the queue to wait

**126** Matchmaker informs Manager of failure to assign staff to customer

This is optional as queuing may be expected in some service situations. Several managers may be informed in turn until one accepts and responds to the notification.

**128** Customer is placed in a queue

*Fig. 9 (cont.)*

EP 1 835 450 A1

**European Patent Office**

**EUROPEAN SEARCH REPORT**

Application Number

EP 07 00 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/078209 A1 (THOMSON RODNEY A [US]) 22 April 2004 (2004-04-22) <br> * abstract * <br> * page 1, paragraphs 5,7,9 * <br> * page 2, paragraphs 16,18,19 * <br> * page 3, paragraphs 26,29 * <br> * page 4, paragraph 30 * <br> * page 5, paragraphs 39-41,43 * <br> * page 6, paragraph 49 - paragraph 50 * <br> ----- | 1-32 | INV. <br> G06Q10/00 <br> G06Q30/00 |
| X | WO 2005/103970 A (QM GROUP LTD [GB]; CHRISTIE MARTIN STUART [GB]) 3 November 2005 (2005-11-03) <br> * abstract * <br> * page 3, line 8 - line 25 * <br> * page 4, line 10 - line 27 * <br> * page 5, line 19 - page 6, line 28 * <br> * page 7, line 1 - page 8, line 24 * <br> * claim 1 * <br> ----- | 1-32 | |
| X | WO 01/40959 A (LIGHTNING ROD SOFTWARE INC [US]) 7 June 2001 (2001-06-07) <br> * abstract * <br> * page 5, line 4 - line 14 * <br> * page 9 - page 11; tables 1,2 * <br> * page 12, line 8 - page 14, line 13 * <br> ----- | 1-32 | TECHNICAL FIELDS SEARCHED (IPC) <br><br> G06Q |

The present search report has been drawn up for all claims

| Place of search | Date of completion of the search | Examiner |
|---|---|---|
| The Hague | 24 May 2007 | Rossier, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 5125

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2007

| Patent document cited in search report | Publication date | Patent family member(s) | | Publication date |
|---|---|---|---|---|
| US 2004078209 A1 | 22-04-2004 | NONE | | |
| WO 2005103970 A | 03-11-2005 | EP | 1738317 A1 | 03-01-2007 |
| WO 0140959 A | 07-06-2001 | AU | 2426501 A | 12-06-2001 |

EPO FORM P0459

For more details about this annex : see Official Journal of the European Patent Office, No. 12/82